# EUROPÄISCHE PATENTANMELDUNG

(11) **EP 0 695 765 A1**
(43) Veröffentlichungstag der Anmeldung: **07.02.1996**
(21) Anmeldenummer: 95111478.4
(22) Anmeldetag: 21.07.1995
(51) Int. Cl.: C08F 10/00

(54) **Katalysatorsystem und Verfahren zur Polymerisation von Olefinen**

(30) Priorität: 01.08.1994 AT 1512/94
(71) Anmelder: PCD-Polymere Gesellschaft m.b.H., A-2323 Schwechat-Mannswörth (AT)
(72) Erfinder: Ernst, Eberhard, Dr., A-4223 Katsdorf (DE); Reussner, Jens, Dr., A-4050 Traun (DE); Neissl, Wolfgang, Dipl.-Ing.Dr., A-4040 Lichtenberg (DE)
(74) Vertreter: Kunz, Ekkehard, Dr.

(57) **Zusammenfassung**

Katalysatorsystem auf Basis von Metallocenen, Aluminoxanen, organischen Übergangsmetallverbindungen und eines Katalysatorträgers. Die neuen Katalysatoren können vorteilhaft zur Polymerisation von Olefinen eingesetzt werden.

## Beschreibung

Die Erfindung betrifft ein heterogenes Katalysatorsystem für die Polymerisation von Olefinen, sowie ein Polymerisationsverfahren zur Herstellung von Polyolefinen, insbesondere von Polypropylenen (PP) bzw. dessen Copolymeren, die direkt im Reaktor als Blends von isotaktischen Polypropylenen und Stereoblock-Polypropylenen bzw. dessen Copolymeren erhalten werden.

Die Herstellung von Stereoblock-Polypropylenen bzw. elastomeren Polypropylenen (ELPP), die im wesentlichen eine stereoreguläre Blockanordnung im Kettenaufbau mit abwechselnden isotaktischen und ataktischen PP-Sequenzen in der Polymerkette besitzen, durch Polymerisation von Propylen, gegebenenfalls gemeinsam mit anderen Comonomeren, ist mit Hilfe spezieller Katalysatoren möglich. Solche Katalysatoren können beispielsweise metallorganische Ti-, Zr- oder Hf-Verbindungen auf einem Oxidträger (US 4335225), Metallocenkatalysatoren in Kombination mit Aluminoxanen (US 4522982) oder Reaktionsprodukte von Magnesiumalkoxiden mit einem tetravalenten Titanchlorid in Gegenwart spezieller Elektronendonatoren (US 5118 768) sein.
Bei der Aufarbeitung der mit diesen Katalysatoren hergestellten elastomeren Polypropylene zeigt sich jedoch, daß die Produkte sehr leicht agglomerieren und nicht frei fließend sind. Eine weitere Verarbeitung wird durch die Bildung von Klumpen sowie die Anhaftung und Verklebung an Transport- und Apparateteilen erschwert.
In DE-OS 43 21 496 wird dieser Nachteil beseitigt, indem ein spezieller Zr-Träger-Katalysator in flüssigem Propen verwendet wird und im Anschluß an die Polymerisation mit einem polaren Lösungsmittel oder mit CO₂ versetzt wird, um das gebildete Polypropylen auszufällen.

Desweiteren ist bekannt, daß man mit Metallocenen in Kombination mit Methylaluminoxanen isotaktisches Polypropylen (IPP) herstellen kann (Hoe EP-A-485823). Diese isotaktischen Polypropylene zeichnen sich durch ihre enge Molmassenverteilung und ihre hohe Kristallinität aus. Nachteil ist, daß die Produkte pulverförmig und damit für technische Anwendungszwecke untauglich sind.

Ebenso bekannt ist, daß Mischkatalysatoren bestehend aus einem Metallocen und einem konventionellen Ziegler-Natta-Katalysator, für die Herstellung von isotaktischen Polyolefinen, speziell von isotaktischem Polypropylen eingesetzt werden. Hierzu ist es erforderlich, das Metallocen auf dem heterogenen Ziegler-Natta-System zu fixieren. Die Polymerisate weisen einen hohen isotaktischen Anteil und eine breite Molmassenverteilung auf (Fina EP-A-0536104). Jedoch besitzen die Produkte eine hohe Steifigkeit, die für spezielle Anwendungen von Nachteil ist.

Durch Mischen von hochmolekularem, elastomerem PP und konventionellem isotaktischem PP kann man die beschriebenen Nachteile beseitigen und maßgeschneiderte, für den jeweiligen Einsatzzweck optimal geeignete Polymer-Blends herstellen. In DE-OS 43 30 341 werden ELPP/IPP-Blends als Knetermischungen beschrieben. Diese Blends zeichnen sich durch ihre erhöhte Rohfestigkeit bei herabgesetzter Steifigkeit aus, was für viele Anwendungen, wie z. B. bei der Herstellung von Folien, Schläuchen, Faltenbälgen etc. von Vorteil ist. Um diese hochmolekularen Mischungen technisch verarbeiten zu können, ist es erforderlich, beide Komponenten zusätzlich zum Mischvorgang zunächst in einem weiteren Verarbeitungsschritt im Extruder chemisch zu degradieren.
Es bestand somit die Aufgabe, ein Katalysatorsystem und ein Polymerisationsverfahren zu entwickeln, bei dem die beschriebenen Nachteile vermieden werden, und die es insbesondere ermöglichen, in einem einfachen Verfahren und direkt im Reaktor in einer "in situ"-Reaktion rieselfähige Polypropylen-Reaktorblends herzustellen.

Gelöst wurde die Aufgabe durch die Verwendung eines Katalysatorsystems auf Basis eines Metallocens, eines Aluminoxans, einer organischen Übergangsmetallverbindung und eines Katalysatorträgers.

Gegenstand der Erfindung ist somit ein Katalysatorsystem zur Olefinpolymerisation, enthaltend
a) Metallocene von Übergangsmetallen der III., IV., V. und VI. Nebengruppe des Periodensystems, wobei unter die III. Nebengruppe auch die inneren Übergangselemente der Lanthaniden fallen,
b) Aluminoxane,
c) Metalloxide der II., III. und IV. Hauptgruppe des Periodensystems,
d) Organometallverbindungen der Formel I 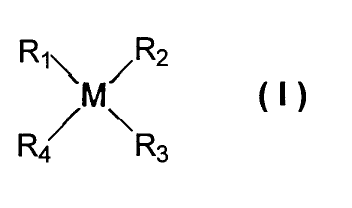
worin
- M: ein Übergangsmetall der III., IV., V. oder VI. Nebengruppe des Periodensystems einschließlich der Lanthaniden und
- R₁ bis R₄: gleich oder verschieden sein können und einen Allyl-, Benzyl-, Neophyl- oder Neopentylrest bedeuten.

Als Metallocene können alle Verbindungen eingesetzt werden, die aus einem Übergangsmetall als Zentralatom und Koordinationsliganden auf Basis von substituierten oder unsubstituierten ein- oder mehrkernigen Kohlenwasserstoffen, die mit dem Zentralatom eine Sandwichstruktur bilden können, oder auf Basis von Amido-, Phosphido- oder Arsenidoresten aufgebaut sind, wobei die Koordinationsliganden auch über Brückenglieder verbunden sein können. Derartige Metallocene sind beispielsweise in DE-OS 44 17 542 (PCD), EP-A 336 128 (Hoechst) oder EP-A-536 104 (Fina) beschrieben. Bevorzugt werden Metallocene auf Basis von substituierten oder unsubstituierten, symmetrischen oder unsymmetrischen Cyclopentadienyl-, Indenyl- oder Fluorenyl-Metallocenen der Formel II, 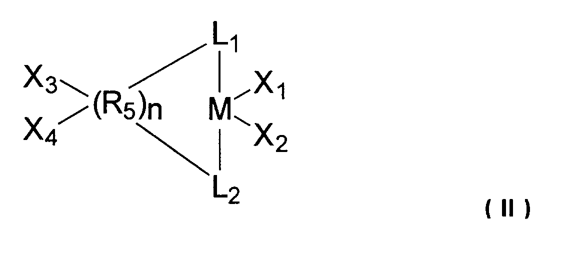
worin M ein Übergangsmetall wie in Formel I darstellt,
X₁ bis X₄ gleich oder verschieden sind und eine C₁ - C₁₀-Alkylgruppe, eine C₁ - C₁₀- Alkoxygruppe, eine C₆ - C₁₀-Arylgruppe, eine C₆ - C₁₀- Aryloxygruppe, eine C₂ - C₁₀ -Alkenylgruppe, eine C₇ - C₂₀- Arylalkylgruppe, eine C₇ - C₂₀- Alkylarylgruppe, eine C₈ - C₂₀ - Arylalkenylgruppe, Wasserstoff oder ein Halogenatom bedeuten,
L₁ und L₂ gleich oder verschieden sind und einen substituierten oder unsubstituierten Cyclopentadienyl-, Indenyl- oder Fluorenylrest darstellen,
R₅ Kohlenstoff, Silizium, Germanium und Zinn sein kann,
n für eine ganze Zahl von 0 bis 4 steht, wobei für den Fall, daß n = 0 ist, die freien Valenzen an L₁ und L₂ durch einen Rest X₁ bis X₄ substituiert sind,
wie sie beispielsweise aus DE-OS 44 17 542 bekannt sind, eingesetzt.

Weiters bevorzugt sind Katalysatorsysteme, in denen das Zentralatom der Metallocene Ti, Zr oder Hf ist.

In Formel III ist beispielhaft ein weiteres erfindungsgemäß bevorzugt verwendbares Metallocen mit einem Zr-Zentralatom auf Basis von Indenyl-Koordinationsliganden gezeigt: 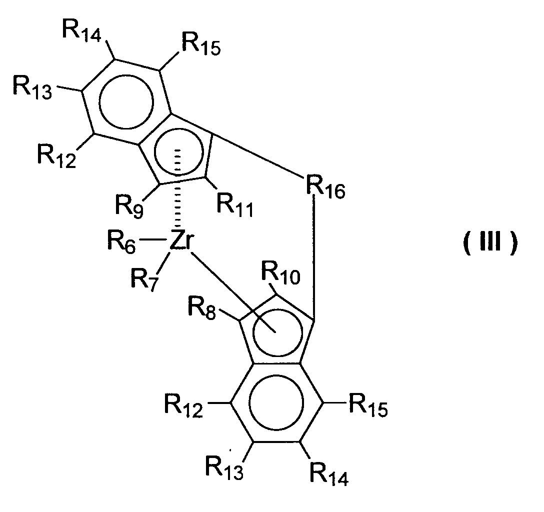
worin
- R₆und R₇: gleich oder verschieden sind und ein Halogenatom, eine C₁-C₁₀-Alkylgruppe oder eine C₁-C₁₀-Alkoxygruppe ist,
- R₈ bis R₁₁: gleich oder verschieden sind und ein Wasserstoffatom, eine C₁-C₁₀-Alkylgruppe oder eine C₆-C₁₀-Arylgruppe ist,
- R₁₂ bis R₁₅: gleich oder verschieden sind und ein Wasserstoffatom, eine C₁-C₁₀-Alkylgruppe, eine C₆-C₁₀-Arylgruppe, eine C₂-C₁₀-Alkenylgruppe bedeuten und
- R₁₆: eine -CH₂-CH₂-, eine Si(CH₃)₂ oder eine C(CH₃)₂-Brücke ist,
Als Aluminoxane können sowohl lineare 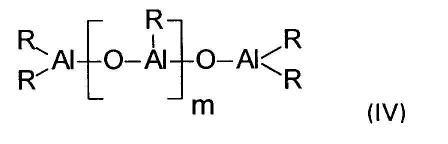
als auch cyclische Aluminoxane 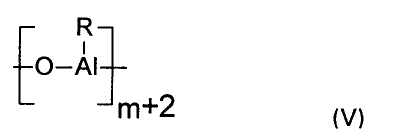
eingesetzt werden, wobei in den Formeln IV und V die Reste gleich oder verschieden sein können und eine C₁-C₆-Alkylgruppe, eine C₆ - C₁₀-Aryl- bzw. Alkylarylgruppe bedeuten und m eine ganze Zahl von 1 - 50. Bevorzugt sind die Reste gleich und bedeuten Methyl, Isobutyl, Phenyl oder Benzyl, besonders bevorzugt ist Methyl. Das Aluminoxan kann auf verschiedene Arten nach bekannten Verfahren hergestellt werden. Eine Möglichkeit ist beispielsweise die Umsetzung von Aluminiumalkylen mit kristallwasserhaltigem Aluminiumsulfat (Hoechst EP-A-302424). Besonders vorteilhaft wird handelsübliches MAO (Methylaluminoxan, Fa. Witco, BRD) verwendet.

Die anorganischen Oxide der Metalle der II. bis IV. Hauptgruppe des Periodensystems sind übliche Trägermaterialien für Katalysatoren. Bevorzugt sind die Oxide der Metalle Magnesium, Calcium, Aluminium, Silicium, Bor und deren Mischungen. Insbesondere bevorzugt sind z. B. die im Handel erhältlichen Aluminiumoxide "Alumina Typ C" (Fa. Degussa) und Siliciumoxide vom Typ " Silica Davison Grade 952 - 957 ", sowie Mischungen aus Al₂O₃ und SiO₂.
Vorteilhaft ist eine thermische Vorbehandlung des anorganischen Trägers im Inertgasstrom oder im Vakuum bei Temperaturen von 30 - 1000°C über einen Zeitraum von 1 - 50 Stunden. Diese thermische Vorbehandlung erfolgt vorzugsweise in einem Konditionierbehälter unter Vakuum bei Temperaturen von 200 - 800°C über einen Zeitraum von 2 - 8 Stunden.

Die Herstellung der Organometallverbindungen gemäß Formel I erfolgt beispielsweise analog den in US 3 932 307 und US 4 335 225 beschriebenen Verfahren. Eine Möglichkeit zu ihrer Herstellung ist die Umsetzung des Übergangsmetallhalogenids mit dem entsprechenden Grignard-Reagenz.

Die Herstellung des erfindungsgemäßen Katalysatorsystems erfolgt durch beliebiges Mischen der einzelnen Komponenten a) bis d). Es ist jedoch bevorzugt, daß zunächst die Metallocene (a) und Aluminoxane (b) miteinander vermischt werden, und diese Mischung sodann mit dem Reaktionsprodukt aus Metalloxiden (c) und Organometallverbindungen (d) vermischt wird. Es ist weiters bevorzugt, die einzelnen Komponenten in einem inerten Lösungsmittel, wie z. B. einem Kohlenwasserstoff zu mischen.

In einer weiters bevorzugten Art erfolgt die Herstellung des erfindungsgemäßen Katalysatorsystems in der Weise, daß zunächst die metallorganische Verbindung der Formel I mit dem thermisch behandelten Metalloxid umgesetzt wird. Die beiden Katalysatorkomponenten werden im allgemeinen im Verhältnis von etwa 0,01 bis 1 mmol der metallorganischen Verbindung pro Gramm Metalloxid umgesetzt. Bevorzugte Katalysatorkomponenten sind Tetraneophylzirkonium (TNZ) und hydroxyliertes Al₂O₃. Die Herstellung dieses Katalysators wird beispielsweise in US 4335225 beschrieben.

In einem zweiten Schritt wird das Metallocen und das Aluminoxan auf den so vorbereiteten Katalysator aufgetragen. Dazu wird zunächst das Metallocen mit dem Aluminoxan gemischt. Das Mischen wird bevorzugt in Lösung vorgenommen, wobei das Metallocen beispielsweise in einem inerten Kohlenwasserstoff aufgelöst und mit einer Lösung des Aluminoxans vermischt wird. Als inerte Lösungsmittel eignen sich beispielsweise aliphatische oder aromatische Kohlenwasserstoffe, bevorzugt wird Toluol. Die Konzentration des Aluminoxans in der Lösung liegt im Bereich von etwa 5 bis 30 Gew.-% bezogen auf die Gesamtlösung. Die Metallocene werden vorzugsweise in einer Menge von 10 ⁻⁴ bis 1 mol pro mol Aluminoxan eingesetzt. Die Mischzeit beträgt 5 min bis 24 Stunden, vorzugsweise 5 bis 60 Minuten. Man arbeitet bei einer Temperatur von -10 bis +70°C, insbesondere bei 10 bis 40°C.
Die Auftragung der Metallocen/Aluminoxan-Reaktionsmischung auf den Trägerkatalysator (Metalloxid plus metallorganische Verbindung der Formel I) erfolgt bevorzugt in Lösung. Hierzu wird der Trägerkatalysator mit einem inerten Lösungsmittel unterschichtet und anschließend mit der Lösung des Metallocen/Aluminoxan-Komplexes verrührt. Als Lösungsmittel werden inerte aliphatische und aromatische Kohlenwasserstoffe bevorzugt. Insbesondere wird Toluol verwendet. Die Reaktionszeit beträgt 10 min bis 24 Stunden, vorzugsweise 10 bis 60 Minuten. Es wird bei einer Temperatur von 0 bis 80°C, insbesondere bei 10 bis 50°C gearbeitet.
Nach Beendigung der Reaktion wird das Lösungsmittel im Vakuum abgezogen, danach mit einem niedrigsiedenden, inerten Aliphaten mehrmals gewaschen. Bevorzugt wird n-Pentan eingesetzt. Der Metallocengehalt des dabei erhaltenen Katalysatorsystems liegt bevorzugt im Bereich zwischen 0,01 bis 1 Gew.-%, besonders bevorzugt zwischen 0,05 bis 0,3 Gew.-% bezogen auf die Masse des Gesamtkatalysators.
Das erfindungsgemäße Katalysatorsystem wird bevorzugt zur Polymerisation von Olefinen, wie z. B. Ethylen, Propen, Buten, 1-Buten, 1-Hexen, 4-Methyl-1-penten, 1-Octen, Cyclopenten, Norbornen oder Norbornadien eingesetzt.
Demnach ist ein weiterer Gegenstand der Erfindung die Verwendung des erfindungsgemäßen Katalysatorsystems zur Polymerisation von Olefinen.

Ein weiterer Gegenstand der Erfindung ist ein Verfahren zur Herstellung von Polyolefinen, bei dem die Olefine in Gegenwart des erfindungsgemäßen Katalysatorsystems polymerisiert werden. Besonders vorteilhaft ist die Herstellung von Polyolefin-Blends aus isotaktischen und elastomeren Polypropylenen, bei dem Propylen, gegebenenfalls gemeinsam mit weiteren Comonomeren, in Gegenwart des erfindungsgemäßen Katalysatorsystems polymerisiert wird.

Der besondere Vorteil der Verwendung des erfindungsgemäßen Katalysatorsystems liegt insbesondere darin, daß es möglich wird, direkt im Polymerisationsreaktor in einem Schritt "in situ" Polymer-Blends aus isotaktischen und elastomeren Stereoblock-Homo- und Copolymeren herzustellen, wobei sowohl der für derartige Blends bisher erforderliche Verfahrensschritt des Mischens, als auch die chemische Degradierung zur Erzielung von verarbeitungsfähigen Polymeren mit genügend niedriger Viskosität entfallen. Die erfindungsgemäß hergestellten Polymere sind gut rieselfähig, besitzen eine kompakte kugelförmige Gestalt und lassen sich gut verarbeiten.

Ein weiterer Vorteil liegt darin, daß es möglich ist, Polymer-Blends mit hohen Molmassen, sowie mit breiter und/oder bimodaler Molmassenverteilung herzustellen. So ist es beispielsweise möglich, in einem Schritt sowohl hochmolekulare elastomere PP, als auch niedermolekulare isotaktische PP direkt im Reaktor herzustellen.

Der erfindungsgemäße Katalysator kann sowohl als Pulver, als auch als Suspension in einem inerten Kohlenwasserstoff, beispielsweise Pentan, Hexan, Cyclohexan oder Mineralölen, in die Polymerisationsmischung eingebracht werden. Die Polymerisation wird in bekannter Weise in Lösungs-, Suspensions- oder Gasphasenverfahren, kontinuierlich oder diskontinuierlich bei einer Temperatur von -10 bis +200°C, vorzugsweise +20 bis +80°C durchgeführt. Polymerisiert wird Propen, gegebenenfalls gemeinsam mit weiteren Comonomeren wie z.B. Ethylen, 1-Buten, 1-Hexen, 4-Methyl-1-penten, 1-Octen, Cyclopenten, Norbornen oder Norbornadien. Als Molmassenregler wird, falls erforderlich, Wasserstoff zugegeben. Der Gesamtdruck der Polymerisation beträgt 0,5 - 150 bar. Bevorzugt ist die Polymerisation in dem Druckbereich von 1 bis 40 bar.
Die Menge der eingesetzten Trägers beträgt 0,1 bis 1g pro Liter Reaktorvolumen, insbesondere 0,2 bis 0,6g pro Liter Reaktorvolumen. Die Menge der Übergangsmetallverbindungen, bezogen auf das Übergangsmetall, beträgt 10⁻³ bis 10⁻⁸ mol Übergangsmetall, vorzugsweise 10⁻⁴ bis 10⁻⁷ mol pro Gramm Träger. Das Aluminoxan wird in einer Konzentration von 10⁻⁶ bis 10⁻¹ mol, vorzugsweise 10⁻⁵ bis 10⁻² mol pro Gramm Träger eingesetzt.
Wenn die Polymerisation als Suspension- oder Lösungspolymerisation durchgeführt wird, wird ein inertes Lösemittel verwendet. Beispielsweise können aliphatische oder cycloaliphatische Kohlenwasserstoffe, wie Pentan, Hexan oder Cyclohexan verwendet werden. Brauchbar ist auch Toluol. Bevorzugt wird im flüssigen Monomeren polymerisiert. Werden inerte Lösungsmittel eingesetzt, wird Propen gasförmig oder flüssig zudosiert.
Die Dauer der Polymerisation beträgt 10 min bis 6 Stunden, bevorzugt eine bis drei Stunden.

Die nachfolgenden Beispiele sollen die Erfindung näher erläutern.

Es bedeuten: 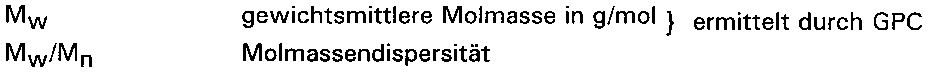
MFI(230/2,16) Schmelzindex, gemessen nach DIN 53735; 230°C Schmelztemperatur und 2,16 kg Belastung

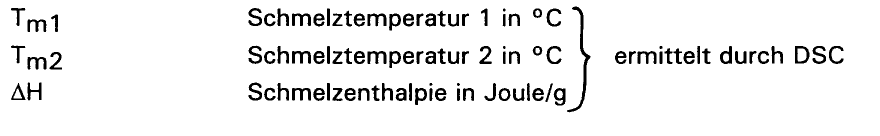

### A) Herstellung des Katalysators

### 1) Herstellung des Tetraneophylzirconium (TNZ) /Al₂O₃-Trägerkatalysators

Unter Schutzgas wird 21,59 g gereinigtes TNZ (Herstellung gemäß DE-OS 43 21 496) in 300 ml trockenem Hexan gelöst und in einen Tropftrichter überführt, anschließend wird die so vorbereitete Lösung langsam unter Rühren einer Suspension aus 171,25g Al₂O₃ und 3,25 l Hexan zugetropft und 14h bei Raumtemperatur gerührt. Das verwendete Aluminiumoxid wird in einen ausgeheizten und mit Stickstoff gespülten Konditionierbehälter gefüllt und 4h unter Vakuum bei 385°C geglüht und entgast, anschließend unter Stickstoff-Überdruck abgekühlt und bei einem bar bis zum Einsatz gelagert. Nach Beendigung der Reaktion wird das überschüssige Lösungsmittel abgezogen und anschließend im Vakuum bis zur Gewichtskonstanz getrocknet. Der so erhaltene Trägerkatalysator weist einen TNZ-Gehalt von 11,89 Ma-% auf. Unter Stickstoff ist er beliebig lange haltbar.

### 2) Fixierung des Metallocen/MAO-Komplexes auf den TNZ/Al₂O₃-Trägerkatalysator

7,5 mg Ethylenbis(indenyl)zirkoniumdichlorid (Fa. Witco) wird unter Stickstoff in 10 ml Toluol gelöst. Anschließend wird 4,95 g einer 10,5 Masse-%-igen MAO-Lösung (Methylaluminoxan, Fa. Witco) langsam unter Rühren zugetropft und 15 min gerührt. Die so erhaltene Katalysatorlösung wird mit einer Spritze aufgenommen und unter Rühren zu 5,48g des unter 1) hergestellten TNZ/Al₂O₃-Trägerkatalysator zugesetzt. Danach wird 45 min bei Raumtemperatur nachgerührt, anschließend unter Vakuum das Lösungsmittel abgezogen, mit 20 ml Pentan zweimal gewaschen und getrocknet. Der so hergestellte Katalysator weist einen Metallocengehalt von 0,08 Masse-% auf. Das Molverhältnis Al(MAO) : Zr (MC) beträgt 500 : 1.

### B) Polymerisation

### Beispiel 1

Ein bei 160°C und 0,1 mbar ausgeheizter 5 l - Doppelmantel-Autoklav mit Rührer, Thermostatmantel, Temperatur-, Drehzahl- und Drehmomentmessung wurde nach drei Propen/Vakuumzyklen mit 500 g Propen bei 16°C befüllt. Nach Erhöhung der Rührgeschwindigkeit auf 400 U/min und Aufheizung des Systems auf 30°C wurden 2g des unter A2) beschriebenen Katalysators mit 1000g Flüssigpropen eingespült. Innerhalb von 10 min wurde der Reaktor auf eine Arbeitstemperatur von 60°C aufgeheizt und dabei die Rührgeschwindigkeit auf 700 U/min erhöht. Nach einer Polymerisationszeit von 2h wurde die Rührerdrehzahl auf 150 U/min gesenkt und das überschüssige Propylen unter Beibehaltung der Arbeitstemperatur abgeflasht, nochmals mit Stickstoff gespült, anschließend der Reaktor geöffnet.
Das verbliebene Polymer war rieselfähig, nichtklebend und kugelförmig. Nach Stabilisierung und Trocknung im Vakuumschrank bei 50°C erhielt man 71 g Polymer (Analysendaten siehe Tabelle 1).

### Beispiel 2

Beispiel 1 wurde wiederholt, der Katalysator wies jedoch einen Metallocenanteil von 0,125 Ma-% auf, das Molverhältnis Al (MAO) : Zr (Metallocen) betrug 250 : 1. Die Reaktionszeit betrug 2h, die Polymerisationstemperatur 60°C.
Das verbleibende Polymerprodukt war kugelförmig, rieselfähig und nichtklebend. Es wurden 78 g erhalten (Vgl. Tab. 1).

### Beispiel 3

Die Polymerisation erfolgte analog Beispiel 1, jedoch wies der Katalysator ein Metallocengehalt von 0,125 Ma-% auf, das Al(MAO) : Zr(Metallocen)-Verhältnis betrug 125 : 1. Die Polymerisationstemperatur betrug 60°C, die Polymerisationsdauer 2h.

Erhalten wurde ein elastisches Polymerprodukt von feinkörniger, rieselfähiger Struktur. Es wurde nach der Aufarbeitung entsprechend Beispiel 1 eine Ausbeute von 107 g erzielt.

### Beispiel 4:

2,08 g des unter A2) hergestellten Katalysators wurden analog Beispiel 1 zur Polymerisation von Propen eingesetzt. Jedoch wies der Katalysator einen Metallocengehalt von 0,288 Ma-% auf. Das Al(MAO) : Zr(Metallocen) - Verhältnis betrug 125 : 1. Die Polymerisationstemperatur betrug 60°C, die Polymerisationsdauer 2h. Das erhaltene Polymer war rieselfähig, nichtklebend und wies eine breite Korngrößenverteilung auf. Die Ausbeute des aufgearbeiteten Produktes betrug 201g (Vgl Analysenergebnisse Tab. 1).

### Beispiel 5:

2,12g des unter A2) hergestellten Katalysators (Metallocengehalt 0,283 Ma-%) wurden gemäß Beispiel 1 zur Polymerisation von Propen eingesetzt. Das Al(MAO): Zr(Metallocen)-Verhältnis betrug 125:1. Im Unterschied zu Beispiel 1 wurden 1300g Propen vorgelegt, der Katalysator bei der Polymerisationstemperatur von 60°C mit 200g Propen und einem Stickstoffdruck von 40bar eingespült. Die Reaktionsdauer betrug 2h. Nach Beendigung der Polymerisation erhielt man ein rieselfähiges, körniges Produkt. Die Ausbeute betrug 51g.

### Beispiel 6

Die Polymerisation erfolgte analog Beispiel 5. Die Katalysatormenge betrug 2g mit einem Metallocengehalt von 0,1 Ma-%. Das Al(MAO) : Zr(Metallocen)-Verhältnis betrug 250 : 1. Es konnte eine Ausbeute von 105,4 g erhalten werden. Das Produkt war rieselfähig und von körniger Struktur.

### Beispiel 7:

Beispiel 6 wurde wiederholt, der Metallocengehalt betrug 0,2 Ma-%. Nach 2 Stunden wurde die Polymerisation abgebrochen. Erhalten wurden 381,2 g eines rieselfähigen, kugelförmigen, nichtklebenden Produktes.

### Beispiel 8:

Die Polymerisation von Beispiel 6 wurde wiederholt, jedoch lag der Metallocengehalt des Katalysators bei 0,3 Ma-%. Es konnte eine Ausbeute von 652,3 g erzielt werden. Das Produkt war rieselfähig und feinkörnig.

### Vergleichsbeispiel I:

2,03g eines reinen TNZ/Al₂O₃-Trägerkatalysators wurden mit MAO analog Beispiel A2) umgesetzt. Auf die Zugabe von Metallocen wurde verzichtet. Das Molverhältnis MAO : Zr(TNZ) betrug 5 : 1. Die Polymerisation erfolgte analog Beispiel 1, wobei 17g eines zum Kleben neigenden, nicht rieselfähigen Polymerproduktes erhalten wurden. Das Polymer ist für eine Weiterverarbeitung ungeeignet.

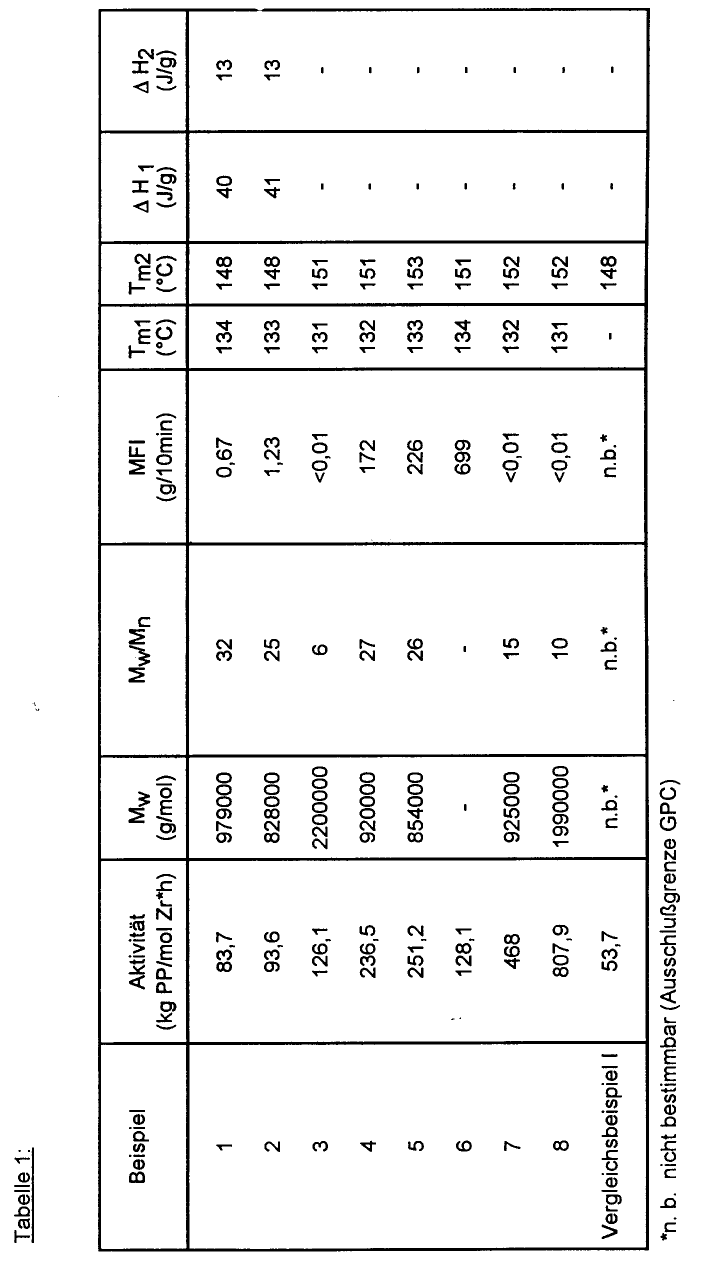

## Patentansprüche

1. Katalysatorsystem zur Olefinpolymerisation, enthaltend
a) Metallocene von Übergangsmetallen der III., IV., V. und VI. Nebengruppe des Periodensystems,
b) Aluminoxane,
c) Metalloxide der II., III. und IV. Hauptgruppe des Periodensystems,
d) Organometallverbindungen der Formel I 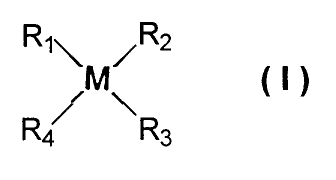
worin
M ein Übergangsmetall der III., IV., V. oder VI. Nebengruppe des Periodensystems und
R1 bis R4 gleich oder verschieden sein können und einen Allyl-, Benzyl-, Neophyl- oder Neopentylrest bedeuten.

2. Katalysatorsystem gemäß Anspruch 1, dadurch gekennzeichnet, daß Metallocene auf Basis von substituierten oder unsubstituierten, symmetrischen oder unsymmetrischen Cyclopentadienyl-, Indenyl- oder Fluorenyl-Metallocenen vorliegen.

3. Katalysatorsystem gemäß Anspruch 1 oder 2, dadurch gekennzeichnet, daß Metallocene auf Basis von Ti, Zr, Hf vorliegen.

4. Verfahren zur Herstellung eines Katalysatorsystems gemäß einem der Ansprüche 1 bis 3, dadurch gekennzeichnet, daß zunächst die Metallocene (a) und Aluminoxane (b) miteinander vermischt werden, und diese Mischung sodann mit dem Reaktionsprodukt aus Metalloxiden (c) und Organometallverbindungen (d) vermischt wird.

5. Verwendung des Katalysatorsystems gemäß einem der Ansprüche 1 bis 3 zur Polymerisation von Olefinen.

6. Verfahren zur Herstellung von Polyolefinen, dadurch gekennzeichnet, daß Olefine in Gegenwart des Katalysatorsystems gemäß einem der Ansprüche 1 bis 3 polymerisiert werden.

7. Verfahren zur Herstellung von Polyolefin-Blends aus isotaktischen und elastomeren Polypropylenen, dadurch gekennzeichnet, daß Propylen, gegebenenfalls gemeinsam mit weiteren Comonomeren, in Gegenwart des Katalysatorsystems gemäß einem der Ansprüche 1 bis 3 polymerisiert wird.
